Europäisches Patentamt

European Patent Office

Office européen des brevets

(11) Publication number: **0 077 691**

**B1**

## EUROPEAN PATENT SPECIFICATION

(45) Date of publication of patent specification: **18.09.85**

(21) Application number: **82305582.7**

(22) Date of filing: **20.10.82**

(51) Int. Cl.⁴: **B 01 D 13/04**

(54) **Supported reverse osmosis membranes.**

(30) Priority: **21.10.81 US 313588**

(43) Date of publication of application:
**27.04.83 Bulletin 83/17**

(45) Publication of the grant of the patent:
**18.09.85 Bulletin 85/38**

(84) Designated Contracting States:
**AT BE CH DE FR GB IT LI NL**

(56) References cited:
**DE-A-2 544 118**
**DE-A-2 554 922**
**DE-A-2 554 932**
**DE-A-2 602 493**
**DE-A-2 633 812**

(73) Proprietor: **E.I. DU PONT DE NEMOURS AND COMPANY**
**1007 Market Street**
**Wilmington Delaware 19898 (US)**

(72) Inventor: **Buckfelder, John Joseph**
**206 Pinehurst Road**
**Wilmington Delaware 19803 (US)**
Inventor: **Schleinitz, Henry Max**
**6 Calvert Circle**
**Kennett Square Pennsylvania 19348 (US)**

(74) Representative: **Jones, Alan John et al**
**CARPMAELS & RANSFORD 43 Bloomsbury Square**
**London, WC1A 2RA (GB)**

## Description

### Background of the invention

Asymmetric membranes of aromatic polyamides have long been used in ultrafiltration and reverse osmosis applications. However, the mechanical properties of the membranes often require reinforcement or support, for example, with polyester fabrics or fibers, in order to prepare satisfactory reverse osmosis structures based on these membranes. Typically, the reverse osmosis membrane is formed by coating an appropriate polymer solution onto the supporting fabric. Difficulties have previously been encountered in providing a supported membrane that has both good flux and high salt rejection. In addition, with the coating of extremely thin membranes, continuity of the membrane on the supporting surface is difficult to obtain. Moreover, the lack of proper adhesion between the supporting fabric and the reverse osmosis membrane can lead to delamination in use which results in the formation of blisters between the supporting fabric and the reverse osmosis membrane.

### Summary of the invention

The instant invention provides an improved process for the preparation of supported reverse osmosis membranes which results in a product having excellent flux and salt rejection characteristics, membrane continuity and low blistering in operation.

Specifically, the instant invention provides a process for the preparation of a reverse osmosis membrane comprising coating a solution of aromatic polyamide, solvent, and modifying salt onto a porous support, evaporating a portion of the volatile components and coagulating the polymer in the resulting membrane in a nonsolvent for the polymer, wherein the porous support is a woven, unsized, polyester or aromatic polyamide fabric, the solvent comprises at least about 80 weight percent dimethylacetamide, and the modifying salt comprises about from 20 to 60 weight percent, based on the polymer, of lithium nitrate, lithium chloride or magnesium chloride.

### Detailed description of the invention

The present invention is based on the discovery of the unique compatibility of a woven, unsized polyester or aromatic polyamide fabric, dimethylacetamide solvent and lithium nitrate, lithium chloride or magnesium chloride salts in the coating solution.

The polymers which can be used in the present invention can be those nitrogen-containing polymers described for example, in US—A—3,567,632, Richter et al. Of the polymers disclosed in that patent, those having a sulfur content of about from 2.0 to 4.5 percent are preferred, as are those polymers prepared from metaphenylenediamine, metaphenylenediamine-4-sulfonic acid and isophthalic and terephthalic acids in which the ratio of isophthalic acid to terephthalic acid is about from 50:50 to 80:20. Within the solvent and salt requirements of the present invention, the coating solutions can be made and the membranes formed according to the usual procedures described therein.

The solvent used in the present casting solutions is dimethylacetamide. The solvent should comprise at least about 80 percent dimethylacetamide, and substantially pure dimethylacetamide is preferred. Up to about 20 percent of a wide variety of other solvent components can be present, including residual water and other solvents such as dimethylformamide, dimethylsulfoxide and dimethylpyrrolidone.

The modifying salts used in the coating solutions in the instant process should be lithium nitrate, lithium chloride, magnesium chloride or combinations thereof. These modifying salts should generally make up about from 20 to 60 weight percent based on the polymer.

The membrane support used in the instant process is a woven, unsized polyester or polyaramide fabric. Fabrics used as a support in reverse osmosis applications are preferably low in cost, stable under the operating conditions encountered in reverse osmosis operations and highly porous so as to retain high flux in operation. The support material used in the present invention is generally prepared by weaving a yarn of polyester or aromatic polyamide which has been sized with poly(acrylic acid) or poly(vinyl alcohol). After weaving into a fabric, the fabric is scoured in water at elevated temperatures, substantially completely removing the sizing originally present on the yarn. The woven cloth is then dried, heat set and calendered and used as the reverse osmosis membrane substrate wtihout further sizing treatment. A particularly satisfactory woven fabric for this purpose is that commercially available from Texlon, Inc. as "Texlon" 0715 (Trade Mark) sailcloth, woven from continuous filament "Dacron" polyester fiber. Other fabrics that have been found particularly satisfactory are "Monotex" fabric prepared from polyester monofilament and commercially available from Advance Process Supply of Pennsauken, New Jersey and fabric prepared from continuous filament "Nomex" aramid fiber and commercially available from Stern & Stern Textiles, Inc.

The final polymer solution generally contains about from 16 to 21 percent polymer, based on the total solution, and further comprises about from 60 to 20 percent of the modifying lithium salt, based on weight of the polymer. In general, increasing concentrations of salt result in higher flux in the finished membrane, while lesser amounts of salt increase the rejection rate of the membrane. While the viscosity of the polymer coating solution can vary widely, it is generally about from 100 to 400 poise (10 to 40 Pa · s) to provide convenient handling characteristics and little tendency to permeate the support fabric. The coating solution further comprises minor quantities of additives typically used in such polymer coating solutions. For example, about 800 parts per million of polyethylene glycol monostearate typically improves the flux of the final membrane without significant depreciation of selectivity.

After coating the solution onto the woven substrate, evaporating a portion of the volatile components and coagulating the polymer in a nonsolvent according to usual techniques, the resulting membrane can be further improved by chemical treatment, such as contacting the membrane with a dilute aqueous solution of about 100 parts per million of polyvinyl methyl ether.

After coating the reverse osmosis membrane onto the porous support, it is preferably annealed to improve the stability of the supported membrane in use. Despite an initial reduction in flux resulting from such annealing, less change in flux over extended operation is realized. Annealing is typically conducted in water at elevated temperatures of about from 50 to 75°C for a period of about from 15 to 60 minutes.

The membranes resulting from the process of the instant invention exhibit an excellent combination of flux and salt rejection, combined with a low propensity toward delamination or blister formation. In this regard, the membranes resulting from the instant process are substantially better in both flux and salt rejection than unsized nonwoven supports and fully equivalent to sized nonwoven supports without the inconvenience and expense of an additional sizing step. The present membranes can exhibit a flux as high as 3.7 m/s · TPa or greater and a salt rejection as high as 97 percent or more. By contrast, high flux and salt rejection do not seem to be realized when different solvents or different salts are used in the membrane coating solution with the same woven support fabrics.

The invention is further illustrated by the following specific examples. In these examples, the polymer used was an aromatic copolyamide of metaphenylenediamine and isophthalic and terephthalic acids according to the formulations and procedures described in U.S.—A—3,567,632.

Examples 1 to 14 and Comparative Examples A to K

In Examples 1 to 14 and Comparative Examples A to K, polymers were used which were prepared from metaphenylenediamine (MPD), metaphenylenediamine-4-sulfonic acid (HSMPD), isophthalylyl chloride (ICI) and terephthalylyl chloride (TCI). The ratios of MPD and HSMPD were varied to provide a sulfur content in the final polymer of 2.5 to 3.4 weight percent, while the ratio of ICI and TCI was varied to provide a ratio of between 50:50 and 80:20. The polymer composition used in Examples 1 to 14 and Comparative Examples A to K is indicated in Table IA.

TABLE IA

| Example | ICl/TCl ratio (moles) | % Sulfur | MPD/HSMPD ratio (moles) |
|---|---|---|---|
| 1 | 50:50 | 3.4 | 72/28 |
| 2 | 50:50 | 3.4 | 72/28 |
| 3 | 50:50 | 3.4 | 72/28 |
| 4 | 60:40 | 2.5 | 80/20 |
| 5 | 60:40 | 2.5 | 80/20 |
| 6 | 60:40 | 2.5 | 80/20 |
| 7 | 70:30 | 2.5 | 80/20 |
| 8 | 70:30 | 2.5 | 80/20 |
| 9 | 80:20 | 3.0 | 76/24 |
| 10 | 80:20 | 3.0 | 76/24 |
| 11 | 80:20 | 3.0 | 76/24 |
| 12 | 80:20 | 2.5 | 80/20 |
| 13 | 80:20 | 2.5 | 80/20 |
| 14 | 80:20 | 2.5 | 80/20 |
| A | 70:30 | 2.5 | 80/20 |
| B | 70:30 | 2.5 | 80/20 |
| C | 70:30 | 2.5 | 80/20 |
| D | 70:30 | 2.5 | 80/20 |
| E | 70:30 | 2.5 | 80/20 |
| F | 70:30 | 2.5 | 80/20 |
| G | 70:30 | 2.5 | 80/20 |
| H | 70:30 | 2.5 | 80/20 |
| I | 70:30 | 2.5 | 80/20 |
| J | 70:30 | 2.5 | 80/20 |
| K | 70:30 | 2.5 | 80/20 |

Membrane coating solutions were prepared from the polymer, solvent and modifying salt in the concentrations indicated in Table IB. The solutions were coated onto a fabric support of the type indicated in Table IB and the resulting membrane was dried, cooled, gelled and substantially fully extracted. In Example 7, the membrane was annealed at 50°C for 30 minutes and post-treated with a dilute solution of polyvinyl methyl ether.

The supported membranes were evaluated for flux and salt rejection characteristics. The results of these tests, together with the process conditions used for each example, are summarized in Table IB.

TABLE IB

| Example | Base | Sizing | Solvent | Polymer conc. wt % | Salt | Salt conc. wt % (BOP) | Coated film thick mm (mils) | Drying temp. °C (°F) | Drying time min. | At 420 psi kw m/s. TPA | Rej. % | Comment |
|---|---|---|---|---|---|---|---|---|---|---|---|---|
| 1 | Texlon[1] | None | DMAC[a] | 20 | LiNO$_3$ | 25 | 0.24 (9.7) | 102 (215) | 12 | 3.2 | 83.9 | |
| 2 | Texlon | None | DMAC | 20 | LiNO$_3$ | 50 | 0.22 (8.9) | 102 (215) | 12 | 5.2 | 89.7 | |
| 3 | Texlon | None | DMAC | 20 | LiNO$_3$ | 40 | 0.23 (9.1) | 102 (215) | 12 | 3.7 | 92.2 | |
| 4 | Texlon | None | DMAC | 18 | LiNO$_3$ | 10 | 0.21 (8.3) | 102 (215) | 12 | .5 | 98.2 | tested 800 psi |
| 5 | Texlon | None | DMAC | 18 | LiNO$_3$ | 50 | 0.20 (8.1) | 102 (215) | 12 | 3.8 | 93.1 | |
| 6 | Texlon | None | DMAC | 18 | LiNO$_3$ | 40 | 0.24 (9.5) | 102 (215) | 12 | 3.2 | 95.5 | |
| 7 | Texlon | None | DMAC | 17 | LiNO$_3$ | 49 | 0.17 (6.7) | 93 (200) | 5.0 | 4.15 / 3.1 / 1.9 | 94.8 / 95.4 / 97.8 | No blisters / Annealed 30'/50°C / Chem. Post treatment |
| 8 | Texlon | None | DMAC | 17 | LiNO$_3$ | 49 | 0.19 (7.5) | 99 (210) | 3.4 | 3.46 | 95.2 | No blisters |
| 9 | Texlon | None | DMAC | 20 | LiNO$_3$ | 60 | 0.25 (10.2) | 102 (215) | 12 | 4.1 | 90.3 | |
| 10 | Texlon | None | DMAC | 20 | LiNO$_3$ | 40 | 0.22 (8.8) | 102 (215) | 12 | 3.6 | 87.2 | |
| 11 | Texlon | None | DMAC | 20 | LiNO$_3$ | 25 | 0.22 (8.9) | 102 (215) | 12 | 2.6 | 91.9 | |
| 12 | Texlon | None | DMAC | 20 | LiNO$_3$ | 25 | 0.20 (7.9) | 102 (215) | 12 | 2.4 | 95.6 | |
| 13 | Texlon | None | DMAC | 20 | LiNO$_3$ | 40 | 0.21 (8.3) | 102 (215) | 12 | 3.8 | 93.6 | |
| 14 | Texlon | None | DMAC | 20 | LiNO$_3$ | 60 | 0.23 (9.1) | 102 (215) | 12 | 4.7 | 88.9 | |

| Example | Base | Sizing | Solvent | Polymer conc. wt % | Salt | Salt conc. wt % (BOP) | Wet film thick mm | (mils) | Drying temp. °C | (°F) | Drying time min. | kw m/s · TPA | Rej. % | Comment |
|---|---|---|---|---|---|---|---|---|---|---|---|---|---|---|
| A | Texlon | None | DMF[10] | 16 | $MgCl_2$ | 39[8] | 0.17 | (6.9) | 99 | (210) | 3.4 | 2.8 | 84.7 | No blisters |
| B | 3329[2] | PAA[7] | DMAC | 17 | $LiNO_3$ | 48 | 0.17 | (7.0) | 88 | (191) | 4.2 | 4.1 / 3.0 | 90.7 / 93.7 | No blisters Annealed 30'/55°C |
| C | 3329 | None | DMAC | 17 | $LiNO_3$ | 48 | 0.17 | (7.0) | 88 | (191) | 4.2 | — | — | Profuse blisters |
| D | 3329 | PAA | DMAC | 16.94 | $LiNO_3$ | 49.53 | 0.17 | (6.8) | 100 | (212) | 4.5 | 3.4 / 2.9 | 96.7 / 97.1 | No blisters Annealed |
| E | 3329 | PAA[7] | DMF | 17.78 | $MgCl_2$ | 30.46[8] | 0.16 | (6.6) | 89 | (192) | 4.2 | 5.4 / 4.8 | 92.9 / 93.2 | No blisters Annealed |
| F | 3329 | None | DMF | 16.18 | $MgCl_2$ | 39.05[8] | 0.20 | (7.9) | 89 | (193) | 3.4 | 0.84 | 32.5 | No blisters |
| G | Pellon[3] | None | DMAC | 18.0 | $LiNO_3$ | 50.0 | 0.14 | (5.9) | 90 | (194) | 2.4 | 2.6 | 84.5 | Blistered |
| H | 3329 | None | DMAC | 18.0 | $LiNO_3$ | 50.0 | 0.20 | (7.9) | 89 | (193) | 3.4 | 5.78 | 91.9 | Blisters |
| I | 3361[4] | None | DMAC | 18.0 | $LiNO_3$ | 50.0 | 0.20 | (7.9) | 89 | (193) | 3.4 | 2.78 | 93.4 | Blisters |
| J | 3264[5] | None | DMAC | 16.7 | $LiNO_3$ | 49.61 | 0.19 | (7.8) | 95 | (203) | 3.4 | 4.1 | 95.0 | Blisters |
| K | Powell[6] | None | DMAC | 16.7 | $LiNO_3$ | 49.61 | 0.17 | (6.9) | 95 | (203) | 3.4 | — | Profuse blisters | |

Notes to Table IB

[1] "Texlon" 0715 (Trade Mark) calendered polyester sailcloth; commercially available from Texlon, Inc.

[2] "Hollytex" 3329 (Trade Mark), calendered spunbonded polyester; commercially available from Eaton-Dikeman.

[3] "Pellon" 6800, resin-bonded polyester; commercially available from Pellon.

[4] "Hollytex" 3361, calendered spunbonded polyester; commercially available from Eaton-Dikeman.

[5] "Hollytex" 3254, calendered spunbonded polyester; commercially available from Eaton-Dikeman.

[6] Powell High Density Fabric, resin-bonded polyester; commercially available from Powell.

[7] Polyacrylic acid sodium salt neutralized to pH 5.0, molecular weight less than 50,000, "Acrysol A-1", commercially available from Rohm and Haas.

[8] Anhydrous $MgCl_2$ concentration; salt added as hexahydrate.

[9] Dimethylacetamide.

[10] Dimethylformamide.

The data demonstrate that excellent supported membranes can be prepared on unsized supports, in which the membranes exhibit excellent flux and salt rejection with no blister formation. The use of magnesium chloride salt and dimethylformamide in Comparative Example A instead of the lithium salt resulted in low flux and salt rejection. The use of a sized support fabric in Comparative Example B resulted in a satisfactory membrane with no blister formation with high water flux but only fair to good salt rejection. The use of unsized nonwoven support fabric in Comparative Example C resulted in profuse blistering with very low salt rejection. The use of a similar, but sized support in Comparative Example D resulted in high flux and high salt rejection. In Comparative Example E, a membrane was produced having good salt rejection and high flux, but with the necessity of a sizing for the nonwoven support fabric. Elimination of the sizing in Comparative Example F resulted in a product having very low flux and salt rejection characteristics. In Comparative Examples G to K, the use of unsized nonwoven support fabrics resulted in blistering in each case.

Examples 15 to 29 and Comparative Examples L to Q

In Examples 15 to 29 and Comparative Examples L to Q, the general procedure of Examples 1 to 14 was repeated, using the Texlon unsized base with DMAC solvent. Lithium nitrate salt was used in the coating solution at the concentrations indicated. The ratio of MPD to HSMPD in the polymer preparation was varied to provide a sulfur content in the final polymer ranging from 2.5 to 4.3 weight percent. The resulting polymers were coated onto a fabric support and evaluated as in Examples 1 to 14. The results are summarized in Table II.

TABLE II

| Example | Polymer conc. wt. % | Salt conc. wt. % (BOP) | % Sulfur | MPD/HSMPD ratio | Coated film thick | | Drying temp. | | Drying time min. | At 420 psi kw m/s · TPa | Rej. % | Comments |
|---|---|---|---|---|---|---|---|---|---|---|---|---|
| | | | | | mm | (mils) | °C | (°F) | | | | |
| 15 | 17 | 50 | 2.5 | 80/20 | 0.26 | (10.5) | 102 | (215) | 10 | 3.9 | 95.8 | |
| 16 | 17 | 50 | 2.5 | 80/20 | 0.15 | (6.1) | 79 | (175) | 10 | 3.9 | 95.3 | |
| 17 | 17 | 50 | 2.5 | 80/20 | 0.16 | (6.3) | 79 | (175) | 15 | 3.9 | 95.8 | |
| 18 | 17 | 50 | 2.5 | 80/20 | 0.16 | (6.5) | 93 | (200) | 5 | 2.1 | 95.6 | |
| 19 | 17 | 50 | 2.5 | 80/20 | 0.18 | (7.1) | 102 | (215) | 5 | 3.7 | 95.1 | |
| 20 | 18 | 50 | 2.5 | 80/20 | 0.24 | (9.5) | 102 | (215) | 12 | 4.9 | 87.6 | |
| 21 | 18 | 40 | 3.0 | 76/24 | 0.23 | (9.4) | 102 | (215) | 12 | 3.3 | 95.0 | |
| 22 | 18 | 25 | 3.4 | 72/28 | 0.25 | (10.1) | 102 | (215) | 12 | 3.0 | 92.5 | |
| 23 | 18 | 40 | 3.4 | 72/28 | 0.23 | (9.3) | 102 | (215) | 12 | 3.4 | 91.8 | |
| 24 | 18 | 60 | 3.4 | 72/28 | 0.22 | (8.7) | 102 | (215) | 12 | 4.6 | 86.8 | |
| 25 | 20 | 25 | 4.3 | 64/36 | 0.25 | (9.9) | 102 | (215) | 12 | 1.9 | 85.1 | |
| 26 | 20 | 50 | 4.3 | 64/36 | 0.23 | (9.3) | 102 | (215) | 12 | 3.3 | 74.2 | |
| 27 | 20 | 25 | 4.3 | 64/36 | 0.22 | (8.7) | 102 | (215) | 12 | 2.1 | 96.1 | made with polymer 50% neutralized with CaO |
| 28 | 20 | 40 | 4.3 | 64/36 | 0.23 | (9.2) | 102 | (215) | 12 | 4.9 | 95.2 | |
| 29 | 20 | 25 | 4.3 | 64/36 | 0.24 | (9.5) | 102 | (215) | 10 | 2.9 | 96.2 | |
| L | 18 | 10 | 2.5 | 80/20 | 0.20 | (8.2) | 102 | (215) | 12 | .5 | 96.1 | tested 800 psi |
| M | 18 | 75 | 2.5 | 80/20 | 0.26 | (10.5) | 102 | (215) | 12 | 5.1 | 86.1 | |
| N | 18 | 10 | 3.0 | 76/24 | 0.18 | (7.3) | 102 | (215) | 12 | 1.5 | 85.5 | |
| O | 18 | 75 | 3.0 | 76/24 | 0.23 | (9.4) | 102 | (215) | 12 | 11.4 | 29.7 | tested 600 psi |
| P | 18 | 10 | 3.4 | 72/28 | 0.18 | (7.4) | 102 | (215) | 12 | .5 | 96.1 | tested 800 psi |
| Q | 18 | 75 | 3.4 | 72/28 | 0.22 | (8.9) | 102 | (215) | 12 | fast | 15 | |

0 077 691

Examples 30 to 36

The general procedure of Examples 1 to 14 is repeated, except that in Examples 30 to 32 the polymer was coated onto an unsized sheet of a fabric prepared from continuous filament "Nomex" aramid fiber, and in Examples 33 to 36 the polymer was coated onto an unsized sheet of "Monotex" fabric prepared from polyester monofilament. The solvent used was DMAC and lithium nitrate salt was added to the solution. The resulting supported membranes were evaluated for flux and salt rejection characteristics. The polymer composition and test results are summarized in Table III.

TABLE III

| Example | Polymer conc. wt. % | Salt conc. wt. % (BOP) | % Sulfur | MPD/HSMPD ratio | Coated film thick | | Drying temp. | | Drying time min. | At 420 psi kw m/s · TPa | Rej. % |
|---------|------|------|-----|-------|------|--------|-----|-------|----|-----|------|
| | | | | | mm | (mils) | °C | (°F) | | | |
| 30 | 18 | 40 | 3.0 | 76/24 | 0.41 | (16.2) | 102 | (215) | 15 | 3.0 | 94.5 |
| 31 | 20 | 40 | 4.3 | 64/36 | 0.45 | (18.0) | 102 | (215) | 15 | 3.6 | 92.8 |
| 32 | 18 | 40 | 3.4 | 72/28 | 0.38 | (15.1) | 102 | (215) | 15 | 2.9 | 89.6 |
| 33 | 17 | 50 | 2.5 | 80/20 | 0.13 | (5.3) | 102 | (215) | 12 | 4.3 | 91.1 |
| 34 | 17 | 50 | 2.5 | 80/20 | 0.13 | (5.2) | 102 | (215) | 15 | 3.4 | 94.9 |
| 35 | 17 | 50 | 2.5 | 80/20 | 0.19 | (7.7) | 102 | (215) | 15 | — | — |
| 36 | 17 | 50 | 2.5 | 80/20 | 0.13 | (5.4) | 102 | (215) | 15 | 2.9 | 92.6 |

Examples 37 to 42

In Examples 37 to 42, the general procedure of Examples 1 to 14 was repeated, except that the polymers used are those shown in Table IVA.

TABLE IVA

| Example | Amine(s) | Amine ratio | Acid(s) | ICI/TCI ratio |
|---|---|---|---|---|
| 37 | | 50/50 | ICI/TCI | 70/30 |
| 38 | | — | ICI | — |
| 39 | | — | ICI/TCI | 70/30 |
| 40 | | — | ICI/TCI | 70/30 |
| 41 | | — | TCI | — |
| 42 | | 50/50 | ICI/TCI | 70/30 |

The polymers were coated onto unsized "Texlon" fabric using DMAC solvent and lithium nitrate salt. The supported membranes were evaluated for flux and salt rejection characteristics. The results of these tests, together with the process conditions used for each example, are summarized in Table IV.

TABLE IV

| Example | Polymer conc. wt. % | Salt conc. wt. % (BOP) | Coated film thick | | Drying temp. | | Drying time min. | Rej. % | At 420 psi kw m/s · TPa | Comments |
|---|---|---|---|---|---|---|---|---|---|---|
| | | | mm | (mils) | °C | (°F) | | | | |
| 37 | 18.9 | 30 | 0.27 | (11.0) | 102 | (215) | 12 | 93.1 | 3.4 | |
| 38 | 20 | 40 | 0.21 | (8.5) | 102 | (215) | 12 | 42.5 | 6.1 | |
| 39 | 16.6 | 50 | 0.25 | (10.1) | 102 | (215) | 12 | 94.9 | .9 | |
| 40 | 16.6 | 30 | 0.19 | (7.5) | 102 | (215) | 12 | 98.9 | 1.5 | |
| 41 | 20 | 40 | 0.27 | (10.7) | 102 | (215) | 12 | 89.2 | 1.9 | |
| 42 | 20 | 40 | 0.20 | (8.1) | 102 | (215) | 12 | — | — | No rejection |

**Claims**

1. A process for the preparation of a reverse osmosis membrane comprising coating a solution of aromatic polyamide, solvent, and modifying salt onto a porous support, evaporating a portion of the volatile components and coagulating the polymer in the resulting membrane in a nonsolvent for the polymer, wherein the porous support is a woven, unsized, polyester or aromatic polyamide fabric, the solvent comprises at least about 80 weight percent dimethylacetamide, and the modifying salt comprises about from 20 to 60 weight percent based on the polymer, of lithium nitrate, lithium chloride or magnesium chloride.

2. A process of Claim 1 wherein the woven fabric is polyester.

3. A process of Claim 1 or Claim 2 wherein the modifying salt consists essentially of lithium nitrate.

4. A process of any one of Claims 1 to 3 further comprising annealing the resulting supported membrane in water at a temperature of about from 50 to 75°C for a period of about from 15 to 60 minutes.

5. A process of any one of Claims 1 to 4 further comprising contacting the supported membrane with an aqueous solution of about 100 ppm polyvinyl methyl ether.

**Patentansprüche**

1. Verfahren zur Herstellung einer Membran für die umgekehrte Osmose, umfassend das Aufschichten einer Lösung von aromatischem Polyamid, Lösungsmittel und modifizierendem Salt auf einem porösen Träger, Verdampfen eines Teils der flüchtigen Komponenten und Koagulieren des Polymeren in der resultierenden Membran in einem Nichtlösungsmittel für das Polymere, wobei der poröse Träger ein gewebter, ungeschlichteter Polyester- oder aromatischer Polyamid-Stoff ist, das Lösungsmittel mindestens etwa 80 Gew.-% Dimethylacetamid umfasst und das modifizierende Salz etwa 20 bis 60 Gew.-%, basierend auf dem Polymeren, von Lithiumnitrat, Lithiumchlorid oder Magnesiumchlorid umfasst.

2. Verfahren nach Anspruch 1, bei dem der gewebte Stoff Polyester ist.

3. Verfahren nach Anspruch 1 oder 2, bei dem das modifizierende Salz im wesentlichen aus Lithiumnitrat besteht.

4. Verfahren nach einem der Ansprüche 1 bis 3, das darüber hinaus das Vergüten der resultierenden Trägermembran in Wasser bei einer Temperatur etwa von 50 bis 75°C während eines Zeitraums etwa von 15 bis 60 Minuten, umfasst.

5. Verfahren nach einem der Ansprüche 1 bis 4, das darüber hinaus den Kontakt der Trägermembran mit einer wässrigen Lösung von etwa 100 ppm Polyvinylmethylether umfasst.

**Revendications**

1. Un procédé pour la préparation d'une membrane d'osmose inverse, consistant à appliquer en revêtement sur un support poreux une solution de polyamide aromatique, de solvant et de sel modificateur, à évaporer une partie des constituants volatils et à coaguler le polymère dans la membrane obtenue dans un non-solvant du polymère, dans lequel le support poreux est une étoffe tissée non-encollée de polyester ou de polyamide aromatique, le solvant comprend au moins 80% en poids de diméthylacétamide, et le sel modificateur comprend environ 20 à 60% en poids, relativement au polymère, de nitrate de lithium, de chlorure de lithium ou de chlorure de magnésium.

2. Un procédé selon la revendication 1, dans lequel l'étoffe tissée est formée de polyester.

3. Un procédé selon la revendication 1 ou 2, dans lequel le sel modificateur est essentiellement formé de nitrate de lithium.

4. Un procédé selon l'une quelconque des revendications 1 à 3, comprenant en outre une recuisson dans l'eau de la membrane supportée obtenue, à une température d'environ 50 à 75°C pendant un temps d'environ 15 à 60 minutes.

5. Un procédé selon l'une quelconque des revendications 1 à 4, comprenant en outre une mise en contact de la membrane supportée avec une solution aqueuse d'environ 100 ppm d'oxyde de méthyle et de polyvinyle.